(19) Europäisches Patentamt / European Patent Office / Office européen des brevets

(11) **EP 1 873 847 A1**

(12) **EUROPEAN PATENT APPLICATION**
published in accordance with Art. 153(4) EPC

(43) Date of publication:
**02.01.2008 Bulletin 2008/01**

(51) Int Cl.:
*H01M 4/58* (2006.01)     *H01M 4/02* (2006.01)
*H01M 10/40* (2006.01)

(21) Application number: **06730770.2**

(22) Date of filing: **31.03.2006**

(86) International application number:
**PCT/JP2006/306822**

(87) International publication number:
**WO 2006/106913 (12.10.2006 Gazette 2006/41)**

(84) Designated Contracting States:
**DE FR GB**

(30) Priority: **31.03.2005 JP 2005101258**

(71) Applicants:
• **TOYO TANSO CO., LTD.**
**Osaka-shi,**
**Osaka 555-0011 (JP)**
• **Sei Corporation**
**Tsu-shi, Mie, 5141118 (JP)**
• **NIPPON CHEMICAL INDUSTRIAL COMPANY LIMITED**
**Tokyo 136-8515 (JP)**

(72) Inventors:
• **TAKEBAYASHI, Hitoshi,**
**c/o TOYO TANSO CO., LTD.**
**Osaka-shi, Osaka 5550011 (JP)**
• **HONGU, Makoto,**
**c/o TOYO TANSO CO., LTD.**
**Osaka-shi, Osaka 5550011 (JP)**

• **TOJO, Tetsuro,**
**c/o TOYO TANSO CO., LTD.**
**Osaka-shi, Osaka 5550011 (JP)**
• **SAITO, Shinji,**
**c/o SEI CORPORATION**
**Tsu-shi, Mie 5141118 (JP)**
• **SAWAI, Takehiko,**
**c/o SEI CORPORATION**
**Tsu-shi, Mie 5141118 (JP)**
• **NEGISHI, Katsuyuki,**
**NIPPON CHEMICAL INDUSTRIAL Co**
**Tokyo 1368515 (JP)**
• **KIKUCHI, Masahiro,**
**NIPPON CHEMICAL INDUSTRIAL Co**
**Tokyo 1368515 (JP)**

(74) Representative: **TBK-Patent**
**Bavariaring 4-6**
**80336 München (DE)**

(54) **CATHODE ACTIVE MATERIAL AND PROCESS FOR PRODUCING THE SAME**

(57)     It is an object of the present invention to provide a cathode active material capable of reducing degradation in an operation voltage and capacity as compared conventionally when used for a lithium ion secondary battery, and a method for manufacturing the same. The cathode active material contains a composite oxide of lithium and a transition metal(s), wherein a reduction loss of TLC in the composite oxide is 20 to 60%. Also, the composite oxide has a particle diameter of 0.5 to 100 $\mu$m, and is preferably fluorinated. The method for manufacturing the cathode active material includes the step of fluorinating the cathode active material. The composite oxide has a particle diameter of 0.5 to 100 $\mu$m. The fluorinating step is to fluorinate the composite oxide in a reaction vessel under conditions where fluorine gas partial pressure is 1 to 200 kPa, a reaction time is 10 minutes to 10 days, and a reaction temperature is -10 to 200°C.

EP 1 873 847 A1

**Description**

Technical Field

The present invention relates to a cathode active material suitably used for, for example, a lithium ion secondary battery, and a method for manufacturing the same.

Background Art

Since a lithium ion secondary battery can be reduced in size and weight, and has a high operation voltage and high energy density, the lithium ion secondary battery has widely spread as a portable power supply or the like for electronic devices. As a conventional cathode active material used for this lithium ion secondary battery, currently $LiCoO_2$ has been mainly used. However, in order to enlarge the battery capacity and reduce material cost, the use of $LiNiO_2$, $LiMn_2O_4$, a compound obtained by substituting Co, Ni, and Mn sites of a lithium metal oxide thereof with A1, Mg, Ti and B or the like, or a composite or the like of the above compounds is being studied.

However, the independent use of $LiNiO_2$ of the above cathode active materials for a positive electrode increases the battery capacity, and $LiNiO_2$ is easily gelated in kneading $LiNiO_2$ with a PVDF binder in mass production of positive plates to cause problems in kneading or coatability. This is because pH of $LiNiO_2$ exhibits alkalinity at 12 or more as compared with other lithium metal oxides, and the dissolved PVDF is gelated when kneading using an NMP solution in which PVDF is dissolved, whereby the PVDF binder cannot be well dispersed. Even if the coating is performed by using this gelated slurry, the condensate of an active material is adhered on the coated surface, thereby generating a streak. Accordingly, the material becomes poor as an electrode plate for batteries. Therefore, pH has been reduced using a material obtained by substituting a part of Ni with a metal such as Co and Mn to prevent gelatification. Also, $LiCoO_2$ and $Li_2MnO_4$ have been merely mixed with $LiNiO_2$ to prevent gelatification.

Furthermore, even when the electrode plate can be manufactured, alkali components which is a residue of the cathode active materials such as $Li_2CO_3$ and LiOH as impurities exist on the surface of the cathode active material of $LiNiO_2$. When the electrode plate can be manufactured as a battery, these alkali components are reacted with an electrolytic solution to generate $CO_2$ gas. This generation increases the inner pressure of the battery, and has a negative influence on the swelling and discharge/charge cycle life of the battery. Also, in some cases, the generation has a negative influence on safety.

In order to suppress the above generation of gas, a technique for acting fluorine gas on a cathode active material has been reported (for example, the following Patent Reference 1). Also, the present applicants have proposed the following Patent Reference 2 as a technique for acting fluorine gas on a cathode active material.

Patent Reference 1: Japanese Published Unexamined Patent Application No. 2004-192896

Patent Reference 2: Japanese Published Unexamined Patent Application No. 2005-11688

Disclosure of the Invention

Problems to be Solved by the Invention

However, although the techniques described in Patent References 1 and 2 reduce the generation of gas, the excessive reaction in the techniques generates insulating LiF on the surface of the active material, and may cause degradation in an operation voltage or capacity.

Therefore, it is an object of the present invention to provide a cathode active material which is particularly the above positive electrode material containing Ni; and which prevents gelatification, reduces the alkali components as a cathode active material residue and reduces the degradation in the capacity caused by resistance components such as LiF as compared conventionally when used for a lithium ion secondary battery, or which has little drop in operation voltage, and a method for manufacturing the same.

Means for Solving the Problems and Effect of the Invention

The present invention provides a cathode active material containing a composite oxide of lithium and a transition metal(s), wherein a reduction loss of TLC caused by fluorination in the composite oxide is 20 to 60%. The TLC (Total Lithium Carbonate) means an amount obtained by converting the unreacted (residue) Li amount remaining on the surface of the cathode active material as $LiCO_3$. Also, the composite oxide has a particle diameter of 0.5 to 100 $\mu$m, and is preferably fluorinated.

Fluorine gas can be reacted with an alkali content ($Li_2CO_3$, LiOH) on the surface of the active material by the above composition to provide a cathode active material in which the alkali content is removed. Therefore, for example, in assembling the lithium ion secondary battery using this cathode active material, a reaction between the cathode active material and an electrolytic solution is suppressed, and the generation of $CO_2$ gas can be remarkably reduced as compared with a conventional one.

Also, since the above composite oxide is fluorinated in the cathode active material of the present invention, the composite oxide itself is also reacted with the fluorine gas as in the alkali content on the surface of the cathode active material to produce a substance having a crystal structure where a part of oxygen atoms are replaced with fluoride atoms such as $Li(Ni/Co/Mn)O_{2-x}F_x$. The structure has little distortion in electronic distribution, does not produce oxygen desorption easily, and has high thermal stability and little collapse of a cathode active material in discharge and charge. Therefore, the cathode active material having excellent cycle characteristics and rate characteristics can be provided.

Also, although, for example, independent $LiNiO_2$ has the worst coatability among cathode active materials, the removal of the alkali content in the reaction with the fluorine gas can realize excellent coating to $LiNiO_2$.

The present invention provides a method for manufacturing a cathode active material including the step of fluorinating the cathode active material containing a composite oxide of lithium and a transitionmetal(s), wherein the composite oxide has a particle diameter of 0.5 to 100 $\mu$m; the fluorinating step is to fluorinate the composite oxide in a reaction vessel; and the fluorinating step is executed under conditions where fluorine gas partial pressure is 1 to 200 kPa, a reaction time is 10 minutes to 10 days, and a reaction temperature is -10 to 200°C. It is preferable that the fluorinating step further includes the step of rotating the reaction vessel itself to stir the composite oxide in the reaction vessel. However, even if a batch type sealed reaction vessel is used, the same cathode active material can be obtained. A fluorine gas concentration, time and temperature of the fluorinating condition, when being smaller than the above condition, reduce the effect as the object. The fluorine gas concentration, time and temperature, when being larger than the condition, generates insulating LiF on the surface of the active material to degrade the operation voltage and the capacity.

Since the fluorine gas is not reacted with the alkali content contained in the composite oxide in the set fluorinating condition range and does not cause an excessive reaction, a method can be provided for manufacturing a cathode active material which generates an extremely small insulating substance degrading the operation voltage and the capacity such as LiF.

Best Mode for Carrying Out the Invention

Next, one example of a cathode active material and a method for manufacturing the same according to an embodiment of the present invention will be described. The cathode active material according to the embodiment of the present invention contains a composite oxide of lithium and a transition metal(s). Examples of the transition metals include Co, Ni and Mn. Examples of the composite oxides include $LiCoO_2$, $LiNiO_2$ and $LiMn_2O_4$. Other examples include an olivine lithium composite oxide of an iron phosphate compound, which provides the same effect. When the composite oxide which is particularly preferable as the cathode active material of the present invention is a lithium nickel cobalt manganese composite oxide represented by a general formula; $LiNi_xCo_yMn_zO_2$, wherein x is greater than or equal to 0.4 and is less than or equal to 1.0, preferably x is greater than or equal to 0.7 and is less than or equal to 1.0, y is greater than or equal to 0 and is less than or equal to 0.2, preferably y is greater than or equal to 0 and is less than or equal to 0.16, z is greater than or equal to 0 and is less than or equal to 0.4, preferably z is greater than or equal to 0 and is less than or equal to 0.2, provided that x+y+z=1. Particularly preferably, the lithium nickel cobalt manganese composite oxide can exhibit a high synergistic effect with a fluoride atom, and further can enhance battery performance such as cycle characteristics and load characteristics.

The above composite oxide has a reduction loss of TLC of 20 to 60% (more preferably 30 to 40%) and a particle diameter of 0.5 to 100 $\mu$m (more preferably 10 to 50 $\mu$m). The composite oxide has a surface on which fluorinated alkali content exists. Since the reduction loss of TLC, when being smaller than the above condition, removes the alkali content insufficiently, problems with coatability due to generation of $CO_2$ gas and slurry gel occur. The reduction loss of TLC, when being larger than the above condition, causes excessive progress of the fluorination of the active material to result in degradation of an operation voltage and capacity due to the increase in resistance components such as LiF. The deviation of the particle diameter from the above condition range causes the streak of an electrode coated surface and the inner short circuit of the battery, and results in remarkable defectives in the battery production.

The method for manufacturing the cathode active material according to the embodiment of the present invention includes the step of fluorinating the cathode active material containing the composite oxide (the particle diameter: 0.5 to 100 $\mu$m) of lithium and a transition metal(s).

In the reaction vessel, the fluorination of the composite oxide of lithium and a transition metal(s) is executed under conditions where fluorine gas partial pressure is 1 to 200 kPa (more preferably 5 to 50 kPa), a reaction time is 10 min to 10 days (more preferably 1 hour to 1 day), and a reaction temperature is -10 to 200°C (more preferably 0 to 100°C). As the reaction vessel, a batch-type sealed reaction vessel is used. Herein, it is preferable that the fluorination further includes the step of rotating the reaction vessel itself to stir the composite oxide in the reaction vessel.

For the fluorination as the above object, the composite oxide previously formed in an electrode plate shape (a metal foil to which a composite oxide is applied) may be produced and fluorinated to manufacture the cathode active material and the positive plate.

According to the embodiment, the cathode active material and the method for manufacturing the same capable of reducing degradation in the operation voltage and capacity as compared conventionally when used for, for example, the lithium ion secondary battery, can be provided.

Examples

Hereinafter, the present invention will be specifically described with reference to examples.

(Examples 1 to 68)

10 g each of cathode active materials $LiNiMnCoO_2$ (Ni:Mn:Co=8:1:1) and $LiNiO_2$ was separately placed into a reaction vessel made of stainless steel, and the reaction vessel was then evacuated. Fluorine gases of predetermined partial pressures respectively shown in the following Tables 1 and 2 were then introduced into the reaction vessel, and the cathode active materials were reacted while stirring the cathode active material. Comparative examples 1 to 17 and comparative examples 18 to 34 to be respectively described later are also shown in the following Tables 1 and 2.
[Table 1]

| LiNiMnCoO$_2$ | Particle Diameter ($\mu$m) | Fluorinating Condition | | | Alkali Content | | Rate Characteristic | | | Cycle characteristics | | |
|---|---|---|---|---|---|---|---|---|---|---|---|---|
| | | F$_2$ Partial pressure (kPa) | Treatment Temperature (°C) | Treatment Time | TLC Reduction Loss (%) | Coatability of Positive Electrode | Discharge Capacity at the First Cycle (0.2C) (mAh/g) | Discharge capacity at the Fourth Cycle (2C) (mAh/g) | Rate Characteristic (2C/0.2C) (%) | Discharge Capacity at the First Cycle (0.2C) (mAh/g) | Discharge Capacity at the Tenth Cycle (0.2C) (mAh/g) | Cycle characteristcs (%) |
| Example 1 | 0.5 | 1 | -10 | 10 Minutes | 20 | O | 191 | 120 | 63 | 191 | 176 | 92 |
| Example 2 | 0.5 | 1 | -10 | 10 Hours | 24 | O | 193 | 122 | 63 | 193 | 178 | 92 |
| Example 3 | 0.5 | 1 | -10 | 10 Days | 30 | O | 200 | 134 | 67 | 200 | 188 | 94 |
| Example 4 | 0.5 | 50 | 50 | 1 Day | 37 | O | 206 | 146 | 71 | 206 | 198 | 96 |
| Example 5 | 0.5 | 100 | 20 | 60 Minutes | 34 | O | 210 | 153 | 73 | 210 | 202 | 96 |
| Example 6 | 0.5 | 200 | -10 | 10 Minutes | 28 | O | 198 | 137 | 69 | 198 | 186 | 94 |
| Example 7 | 0.5 | 200 | -10 | 10 Days | 36 | O | 205 | 144 | 70 | 205 | 197 | 96 |
| Example 8 | 0,5 | 200 | 100 | 10 Days | 41 | O | 204 | 143 | 70 | 204 | 194 | 95 |
| Example 9 | 0.5 | 200 | 200 | 10 Days | 48 | O | 202 | 137 | 68 | 202 | 190 | 94 |
| Example 10 | 0.5 | 1 | 200 | 10 Minutes | 27 | O | 193 | 122 | 63 | 193 | 176 | 91 |
| Example 11 | 0,5 | 1 | 200 | 10 Days | 38 | O | 198 | 137 | 69 | 198 | 186 | 94 |
| Example 12 | 0.5 | 100 | 200 | 10 Minutes | 39 | O | 199 | 135 | 68 | 199 | 185 | 93 |
| Example 13 | 0.5 | 200 | 200 | 10 Minutes | 42 | O | 197 | 134 | 68 | 197 | 181 | 92 |
| Example 14 | 10 | 1 | -10 | 10 Minutes | 23 | O | 193 | 124 | 64 | 193 | 178 | 92 |
| Example 15 | 10 | 50 | 50 | 1 Day | 41 | O | 205 | 144 | 70 | 205 | 195 | 95 |
| Example 16 | 10 | 100 | 20 | 60 Minutes | 37 | O | 213 | 160 | 75 | 213 | 204 | 96 |
| Example 17 | 10 | 200 | 200 | 10 Days | 50 | O | 199 | 135 | 68 | 199 | 183 | 92 |

EP 1 873 847 A1

(continued)

| LiNiMnCoO2 | Particle Diameter (μm) | Fluorinating Condition | | | Alkali Content | | Rate Characteristic | | | Cycle characteristics | | |
|---|---|---|---|---|---|---|---|---|---|---|---|---|
| | | F2 Partial pressure (kPa) | Treatment Temperature (°C) | Treatment Time | TLC Reduction Loss (%) | Coatability of Positive Electrode | Discharge Capacity at the First Cycle (0.2C) (mAh/g) | Discharge capacity at the Fourth Cycle (2C) (mAh/g) | Rate Characteristic (2C/0.2C) (%) | Discharge Capacity at the First Cycle (0.2C) (mAh/g) | Discharge Capacity at the Tenth Cycle (0.2C) (mAh/g) | Cycle characteristcs (%) |
| Example 18 | 20 | 1 | -10 | 10 Minutes | 24 | O | 200 | 136 | 68 | 200 | 184 | 92 |
| Example 19 | 20 | 50 | 50 | 1 Day | 41 | O | 204 | 143 | 70 | 204 | 192 | 94 |
| Example 20 | 20 | 100 | 20 | 60 Minutes | 40 | O | 212 | 157 | 74 | 212 | 201 | 95 |
| Example 21 | 20 | 200 | 200 | 10 Days | 54 | O | 203 | 140 | 69 | 203 | 189 | 93 |
| Example 22 | 100 | 1 | -10 | 10 Minutes | 31 | O | 190 | 118 | 62 | 190 | 173 | 91 |
| Example 23 | 100 | 1 | -10 | 10 Hours | 34 | O | 192 | 121 | 63 | 192 | 175 | 91 |
| Example 24 | 100 | 1 | -10 | 10 Days | 38 | O | 193 | 122 | 63 | 193 | 178 | 92 |
| Example 25 | 100 | 50 | 50 | 1 Day | 46 | O | 206 | 146 | 71 | 206 | 194 | 94 |
| Example 26 | 100 | 100 | 20 | 60 Minutes | 43 | O | 209 | 150 | 72 | 209 | 196 | 94 |
| Example 27 | 100 | 200 | -10 | 10 Minutes | 34 | O | 193 | 120 | 62 | 193 | 178 | 92 |
| Example 28 | 100 | 200 | -10 | 10 Days | 41 | O | 195 | 123 | 63 | 195 | 179 | 92 |
| Example 29 | 100 | 200 | 100 | 10 Days | 55 | O | 197 | 126 | 64 | 197 | 183 | 93 |
| Example 30 | 100 | 200 | 200 | 10 Days | 60 | O | 196 | 123 | 63 | 196 | 180 | 92 |
| Example 31 | 100 | 1 | 200 | 10 Minutes | 31 | O | 194 | 122 | 63 | 194 | 178 | 92 |
| Example 32 | 100 | 1 | 200 | 10 Days | 42 | O | 199 | 135 | 68 | 199 | 187 | 94 |
| Example 33 | 100 | 100 | 200 | 10 Minutes | 42 | O | 200 | 138 | 69 | 200 | 190 | 95 |
| Example 34 | 100 | 200 | 200 | 10 Minutes | 52 | O | 198 | 135 | 68 | 198 | 184 | 93 |

| LiNiMnCoO$_2$ | Particle Diameter ($\mu$m) | Fluorinating Condition | | | Alkali Content | | Rate Characteristic | | | Cycle characteristics | | |
|---|---|---|---|---|---|---|---|---|---|---|---|---|
| | | F$_2$ Partial pressure (kPa) | Treatment Temperature (°C) | Treatment Time | TLC Reduction Loss (%) | Coatability of Positive Electrode | Discharge Capacity at the First Cycle (0.2C) (mAh/g) | Discharge capacity at the Fourth Cycle (2C) (mAh/g) | Rate Characteristic (2C/0.2C) (%) | Discharge Capacity at the First Cycle (0.2C) (mAh/g) | Discharge Capacity at the Tenth Cycle (0.2C) (mAh/g) | Cycle characteristcs (%) |
| Comparative example 1 | 0.5 | - | - | - | 0 | × | 186 | 108 | 58 | 186 | 166 | 89 |
| Comparative example 2 | 0.2 | 1 | -10 | 10 Minutes | 8 | × | 170 | 88 | 52 | 170 | 141 | 83 |
| Comparative example 3 | 0.2 | 200 | 200 | 10 Days | 39 | × | 172 | 91 | 53 | 172 | 144 | 84 |
| Comparative example 4 | 120 | 1 | -10 | 10 Minutes | 36 | × | 181 | 100 | 55 | 181 | 154 | 85 |
| Comparative example 5 | 120 | 200 | 200 | 10 Days | 65 | × | 179 | 97 | 54 | 179 | 150 | 84 |
| Comparative example 6 | 0.5 | 0.5 | -10 | 10 Minutes | 12 | × | 186 | 108 | 58 | 186 | 166 | 89 |
| Comparative example 7 | 100 | 0.5 | 200 | 10 Days | 18 | × | 185 | 107 | 58 | 185 | 165 | 89 |
| Comparative example 8 | 0.5 | 250 | -10 | 10 Minutes | 62 | O | 180 | 99 | 55 | 180 | 153 | 85 |
| Comparative example 9 | 100 | 250 | 200 | 10 Days | 72 | O | 173 | 93 | 54 | 173 | 144 | 83 |
| Comparative example 10 | 0.5 | 1 | -20 | 10 Minutes | 15 | × | 186 | 108 | 58 | 186 | 166 | 89 |
| Comparative example 11 | 100 | 200 | -20 | 10 Days | 18 | × | 185 | 107 | 58 | 185 | 165 | 89 |
| Comparative example 12 | 0.5 | 1 | 250 | 10 Minutes | 61 | O | 175 | 95 | 54 | 175 | 145 | 83 |
| Comparative example 13 | 100 | 200 | 250 | 10 Days | 75 | O | 161 | 69 | 43 | 161 | 134 | 83 |

| LiNiMnCoO$_2$ | Particle Diameter ($\mu$m) | Fluorinating Condition | | | Alkali Content | | Rate Characteristic | | | Cycle characteristics | | |
|---|---|---|---|---|---|---|---|---|---|---|---|---|
| | | F$_2$ Partial pressure (kPa) | Treatment Temperature (°C) | Treatment Time | TLC Reduction Loss (%) | Coatability of Positive Electrode | Discharge Capacity at the First Cycle (0.2C) (mAh/g) | Discharge capacity at the Fourth Cycle (2C) (mAh/g) | Rate Characteristic (2C/0.2C) (%) | Discharge Capacity at the First Cycle (0.2C) (mAh/g) | Discharge Capacity at the Tenth Cycle (0.2C) (mAh/g) | Cycle characteristcs (%) |
| Comparative example 14 | 0.5 | 1 | -10 | 1 Minute | 11 | × | 186 | 108 | 58 | 186 | 166 | 89 |
| Comparative example 15 | 100 | 200 | 200 | 1 Minute | 18 | × | 185 | 107 | 58 | 185 | 165 | 89 |
| Comparative example 16 | 0.5 | 1 | -10 | 12 Days | 62 | O | 178 | 96 | 54 | 178 | 150 | 84 |
| Comparative example 17 | 100 | 200 | 200 | 12 Days | 77 | O | 160 | 69 | 43 | 160 | 133 | 83 |

[Table 2]

| LiNiO$_2$ | Particle Diameter (μm) | Fluorinating Condition | | | Alkali Content | | Rate Characteristic | | | cycle characteristics | | |
|---|---|---|---|---|---|---|---|---|---|---|---|---|
| | | F$_2$ Partial Pressure (kPa) | Treatment Temperature (°C) | Treatment Time | TLC Reduction Loss (%) | Coatability of Positive Electrode | Discharge Capacity at the First Cycle (0.2C) (mAh/g) | Discharge Capacity at the Fourth Cycle (2C) (mAh/g) | Rate Characteristic (2C/0.2C) (%) | Discharge Capacity at the First Cycle (0.2C) (mAh/g) | Discharge Capacity at the Tenth Cycle (0.2C) (mAh/g) | Cycle characteristics (%) |
| Example 35 | 0.5 | 1 | -10 | 10 Minutes | 20 | O | 207 | 141 | 68 | 207 | 166 | 80 |
| Example 36 | 0.5 | 1 | -10 | 10 Hours | 26 | O | 210 | 147 | 70 | 210 | 170 | 81 |
| Example 37 | 0.5 | 1 | -10 | 10 Days | 29 | O | 215 | 155 | 72 | 215 | 181 | 84 |
| Example 38 | 0.5 | 50 | 50 | 1 Day | 37 | O | 222 | 162 | 73 | 222 | 189 | 85 |
| Example 39 | 0,5 | 100 | 20 | 60 Minutes | 32 | O | 227 | 168 | 74 | 227 | 195 | 86 |
| Example 40 | 0.5 | 200 | -10 | 10 Minutes | 24 | O | 211 | 150 | 71 | 211 | 171 | 81 |
| Example 41 | 0.5 | 200 | -10 | 10 Days | 31 | O | 220 | 158 | 72 | 220 | 187 | 85 |
| Example 42 | 0.5 | 200 | 100 | 10 Days | 40 | O | 216 | 153 | 71 | 216 | 179 | 83 |
| Example 43 | 0.5 | 200 | 200 | 10 Days | 45 | O | 213 | 149 | 70 | 213 | 175 | 82 |
| Example 44 | 0.5 | 1 | 200 | 10 Minutes | 25 | O | 211 | 150 | 71 | 211 | 171 | 81 |
| Example 45 | 0.5 | 1 | 200 | 10 Days | 41 | O | 224 | 164 | 73 | 224 | 190 | 85 |
| Example 46 | 0.5 | 100 | 200 | 10 Minutes | 40 | O | 228 | 171 | 75 | 228 | 194 | 85 |
| Example 47 | 0.5 | 200 | 200 | 10 Minutes | 42 | O | 218 | 157 | 72 | 218 | 181 | 83 |
| Example 48 | 10 | 1 | -10 | 10 Minutes | 22 | O | 207 | 143 | 69 | 207 | 166 | 80 |
| Example 49 | 10 | 50 | 50 | 1 Day | 39 | O | 220 | 158 | 72 | 220 | 185 | 84 |
| Example 50 | 10 | 100 | 20 | 60 Minutes | 40 | O | 230 | 175 | 76 | 230 | 198 | 86 |
| Example 51 | 10 | 200 | 200 | 10 Days | 51 | O | 212 | 146 | 69 | 212 | 172 | 81 |

(continued)

| LiNiO$_2$ | Particle Diameter ($\mu$m) | Fluorinating Condition | | | Alkali Content | | Rate Characteristic | | | cycle characteristics | | |
|---|---|---|---|---|---|---|---|---|---|---|---|---|
| | | F$_2$ Partial Pressure (kPa) | Treatment Temperature (°C) | Treatment Time | TLC Reduction Loss (%) | Coatability of Positive Electrode | Discharge Capacity at the First Cycle (0.2C) (mAh/g) | Discharge Capacity at the Fourth Cycle (2C) (mAh/g) | Rate Characteristic (2C/0.2C) (%) | Discharge Capacity at the First Cycle (0.2C) (mAh/g) | Discharge Capacity at the Tenth Cycle (0.2C) (mAh/g) | Cycle characteristics (%) |
| Example 52 | 20 | 1 | -10 | 10 Minutes | 22 | O | 210 | 145 | 69 | 210 | 168 | 80 |
| Example 53 | 20 | 50 | 50 | 1 Day | 41 | O | 219 | 158 | 72 | 219 | 182 | 83 |
| Example 54 | 20 | 100 | 20 | 60 Minutes | 44 | O | 226 | 167 | 74 | 226 | 192 | 85 |
| Example 55 | 20 | 200 | 200 | 10 Days | 57 | O | 209 | 144 | 69 | 209 | 169 | 81 |
| Example 56 | 100 | 1 | -10 | 10 Minutes | 23 | O | 210 | 145 | 69 | 210 | 168 | 80 |
| Example 57 | 100 | 1 | -10 | 10 Hours | 30 | O | 213 | 149 | 70 | 213 | 173 | 81 |
| Example 58 | 100 | 1 | -10 | 10 Days | 41 | O | 214 | 150 | 70 | 214 | 175 | 82 |
| Example 59 | 100 | 50 | 50 | 1 Day | 45 | O | 219 | 158 | 72 | 219 | 182 | 83 |
| Example 60 | 100 | 100 | 20 | 60 Minutes | 38 | O | 225 | 164 | 73 | 225 | 191 | 85 |
| Example 61 | 100 | 200 | -10 | 10 Minutes | 35 | O | 215 | 153 | 71 | 215 | 178 | 83 |
| Example 62 | 100 | 200 | -10 | 10 Days | 44 | O | 222 | 160 | 72 | 222 | 189 | 85 |
| Example 63 | 100 | 200 | 100 | 10 Days | 57 | O | 216 | 153 | 71 | 216 | 179 | 83 |
| Example 64 | 100 | 200 | 200 | 10 Days | 60 | O | 211 | 148 | 70 | 211 | 171 | 81 |
| Example 65 | 100 | 1 | 200 | 10 Minutes | 36 | O | 212 | 148 | 70 | 212 | 172 | 81 |
| Example 66 | 100 | 1 | 200 | 10 Days | 45 | O | 218 | 157 | 72 | 218 | 181 | 83 |
| Example 67 | 100 | 100 | 200 | 10 Minutes | 42 | O | 220 | 161 | 73 | 220 | 185 | 84 |

(continued)

| LiNiO$_2$ | Particle Diameter ($\mu$m) | Fluorinating Condition | | | Alkali Content | | Rate Characteristic | | | cycle characteristics | | |
| | | F$_2$ Partial Pressure (kPa) | Treatment Temperature (°C) | Treatment Time | TLC Reduction Loss (%) | Coatability of Positive Electrode | Discharge Capacity at the First Cycle (0.2C) (mAh/g) | Discharge Capacity at the Fourth Cycle (2C) (mAh/g) | Rate Characteristic (2C/0.2C) (%) | Discharge Capacity at the First Cycle (0.2C) (mAh/g) | Discharge Capacity at the Tenth Cycle (0.2C) (mAh/g) | Cycle characteristics (%) |
|---|---|---|---|---|---|---|---|---|---|---|---|---|
| Example 68 | 100 | 200 | 200 | 10 Minutes | 50 | O | 217 | 156 | 72 | 217 | 180 | 83 |
| Comparative example 18 | 0.5 | - | - | - | 0 | × | 198 | 123 | 62 | 198 | 150 | 76 |
| Comparative example 19 | 0.2 | 1 | -10 | 10 Minutes | 10 | × | 181 | 105 | 58 | 181 | 132 | 73 |
| Comparative example 20 | 0.2 | 200 | 200 | 10 Days | 42 | × | 173 | 92 | 53 | 173 | 119 | 69 |
| Comparative example 21 | 120 | 1 | -10 | 10 Minutes | 35 | × | 190 | 112 | 59 | 190 | 137 | 72 |
| Comparative example 22 | 120 | 200 | 200 | 10 Days | 70 | × | 183 | 99 | 54 | 183 | 124 | 68 |
| Comparative example 23 | 0.5 | 0.5 | -10 | 10 Minutes | 13 | × | 198 | 123 | 62 | 198 | 150 | 76 |
| Comparative example 24 | 100 | 0.5 | 200 | 10 Days | 18 | × | 199 | 123 | 62 | 199 | 151 | 76 |
| Comparative example 25 | 0.5 | 250 | -10 | 10 Minutes | 63 | O | 190 | 112 | 59 | 190 | 137 | 72 |
| Comparative example 26 | 100 | 250 | 200 | 10 Days | 74 | O | 170 | 88 | 52 | 170 | 114 | 67 |

EP 1 873 847 A1

(continued)

| LiNiO$_2$ | Particle Diameter ($\mu$m) | Fluorinating Condition | | | Alkali Content | | Rate Characteristic | | | cycle characteristics | | |
|---|---|---|---|---|---|---|---|---|---|---|---|---|
| | | F$_2$ Partial Pressure (kPa) | Treatment Temperature (°C) | Treatment Time | TLC Reduction Loss (%) | Coatability of Positive Electrode | Discharge Capacity at the First Cycle (0.2C) (mAh/g) | Discharge Capacity at the Fourth Cycle (2C) (mAh/g) | Rate Characteristic (2C/0.2C) (%) | Discharge Capacity at the First Cycle (0.2C) (mAh/g) | Discharge Capacity at the Tenth Cycle (0.2C) (mAh/g) | Cycle characteristics (%) |
| Comparative example 27 | 0.5 | 1 | -20 | 10 Minutes | 6 | × | 198 | 121 | 61 | 198 | 150 | 76 |
| Comparative example 28 | 100 | 200 | -20 | 10 Days | 11 | × | 199 | 123 | 62 | 199 | 151 | 76 |
| Comparative example 29 | 0.5 | 1 | 250 | 10 Minutes | 62 | O | 191 | 113 | 59 | 191 | 138 | 72 |
| Comparative example 30 | 100 | 200 | 250 | 10 Days | 72 | O | 171 | 91 | 53 | 171 | 116 | 68 |
| Comparative example 31 | 0.5 | 1 | -10 | 1 Minute | 12 | × | 198 | 123 | 62 | 198 | 150 | 76 |
| Comparative example 32 | 100 | 200 | 200 | 1 Minute | 18 | × | 199 | 125 | 63 | 199 | 151 | 76 |
| Comparative example 33 | 0.5 | 1 | -10 | 12 Days | 64 | O | 193 | 116 | 60 | 193 | 143 | 74 |
| Comparative example 34 | 100 | 200 | 200 | 12 Days | 71 | O | 174 | 94 | 54 | 174 | 118 | 68 |

<TLC (alkali content) measuring method>

TLC was calculated by a measuring method shown below.

(1) 5 to 20 g of a cathode active material is precisely weighed (Ag), and is placed into a beaker. 50g (precisely weighed) of water is added thereto (Bg), and the cathode active material and water are stirred (washed) for 5 minutes. The resultant mixture is then left to stand, and the supernatant liquid is filtered.
(2) 50 g (precisely weighed) of water is added to the cathode active material washed in process (1) again (Cg), and the resultant is stirred for 5 minutes, and filtered.
(3) Filtrates collected by the processes (1) and (2) are gently mixed, and about 60 g (precisely weighed) of the filtrates for neutralization titration is then divided (Dg).
(4) TLC is calculated according to the following formula from 0.1 mol/l HCl reference solution input amount (E ml).

$$F(g) = E/1000 \times 0.1/2 \times 73.89 \ (Li_2CO_3 \ \text{molecular weight})$$

$$G(g) = A \times D/(B+C)$$

$$TLC \ (\%) = F(g)/G(g) \times 100$$

<Preparation of Secondary Battery>

To 95 wt% of fluorinated $LiNiMnCoO_2$ or $LiNiO_2$, 2 wt% of acetylene black and 3 wt% of PVDF were sufficiently mixed, and the mixture was molded to produce a positive electrode of 40 mm x 40 mm. Also, a lithium metal was used for a negative electrode, and a mixed solvent (mixed volume: 3:7) of ethylene carbonate and diethyl carbonate containing $LiPF_6$ of 1 mol/dm$^3$ was used for an electrolytic solution. A separator formed of a polyethylene film was provided between the positive electrode and negative electrode thus prepared to produce nonaqueous electrolytic solution secondary batteries (lithium ion secondary batteries) of examples 1 to 68.

(Comparative Examples 1 to 34)

In producing positive electrodes, $LiNiMnCoO_2$ of comparative example 1 and $LiNiO_2$ of comparative example 18 were not fluorinated. $LiNiMnCoO_2$ of comparative examples 2 to 17 and $LiNiO_2$ of comparative examples 19 to 34 were fluorinated in conditions shown in Tables 1 and 2 to produce a nonaqueous electrolytic solution secondary battery in the same manner as in examples 1 to 68.

<Secondary Battery Performance Evaluation Test>

For the lithium ion secondary batteries produced as described above, the the cut off potential upper and lower limits, and current density were, respectively, set to 4.3V, 2.0V and 1.0mA/cm$^2$ at 25°C, and discharge and charge tests were performed. In the discharge and charge tests, the lithium ion secondary batteries were discharged and charged in 0.2C at the first to third cycles, charged in 0.2C at the fourth cycle, and then discharged in 2C. The ratio of the discharge capacity at the fourth cycle to the discharge capacity at the first cycle was used as the index of the rate characteristic. The ratio of the discharge capacity at the tenth cycle to the first cycle was used as the index of the cycle characteristics. The results are shown in Tables 1 and 2.
Tables 1 and 2 show that use of the positive electrodes of the examples reduced the alkali content and enhanced the rate characteristic and the cycle characteristics. Also, improvement in the coatability of the cathode active material in producing the positive plate was confirmed.
Therefore, it was found that the cathode active material capable of reducing degradation in the operation voltage and capacity as compared conventionally when used for a lithium ion secondary battery can be provided.
The present invention can be varied in design in the range which does not depart from the Claims, and is not limited to the above embodiments and examples.

**Claims**

1. A cathode active material comprising a composite oxide of lithium and a transition metal(s), wherein a reduction loss of TLC caused by fluorination in the composite oxide is 20 to 60%.

2. The cathode active material according to claim 1, wherein the composite oxide has a particle diameter of 0.5 to 100 $\mu$m.

3. The cathode active material according to claim 1 or 2, wherein the composite oxide is a lithium nickel cobalt manganese composite oxide represented by a general formula; $LiNi_xCo_yMn_zO_2$, wherein x is greater than or equal to 0.4 and is less than or equal to 1.0, y is greater than or equal to 0 and is less than or equal to 0.2, and z is greater than or equal to 0 and is less than or equal to 0.4, provided that x+y+z=1.

4. A method for manufacturing a cathode active material comprising the step of fluorinating the cathode active material comprising a composite oxide of lithium and a transitionmetal(s), wherein
the composite oxide has a particle diameter of 0.5 to 100 $\mu$m;
the fluorinating step is to fluorinate the composite oxide in a reaction vessel; and
the fluorinating step is executed under the conditions where fluorine gas partial pressure is 1 to 200 kPa, a reaction time is 10 minutes to 10 days, and a reaction temperature is -10 to 200°C.

## INTERNATIONAL SEARCH REPORT

| International application No. |
| --- |
| PCT/JP2006/306822 |

A.  CLASSIFICATION OF SUBJECT MATTER
*H01M4/58*(2006.01), *H01M4/02*(2006.01), *H01M10/40*(2006.01)

According to International Patent Classification (IPC) or to both national classification and IPC

B.  FIELDS SEARCHED

Minimum documentation searched (classification system followed by classification symbols)
*H01M4/00-4/62*(2006.01), *H01M10/40*(2006.01)

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2004-192896 A  (Sony Corp.),<br>08 July, 2004 (08.07.04),<br>Claims 1, 3, 6; Par. Nos. [0018] to [0020],<br>[0032]; table 1<br>(Family: none) | 1-4<br>3 |
| X<br>Y | JP 2005-11688 A  (Toyo Tanso Co., Ltd.,<br>SEI Kabushiki Kaisha),<br>13 January, 2005 (13.01.05),<br>Claims 2 to 5, 7; Par. Nos. [0010], [0023];<br>table 1<br>(Family: none) | 1-4<br>3 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 June, 2006 (13.06.06) | Date of mailing of the international search report<br>20 June, 2006 (20.06.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/306822

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y | JP 2000-113907 A  (Toshiba Battery Co., Ltd.),<br>21 April, 2000 (21.04.00),<br>Claim 1; Par. Nos. [0014], [0015], [0026],<br>[0030]<br>(Family: none) | 1,2,4<br>3 |
| X<br>Y | JP 10-284079 A  (Japan Storage Battery Co.,<br>Ltd.),<br>23 October, 1998 (23.10.98),<br>Par. Nos. [0006], [0007], [0011], [0016] to<br>[0020], [0049]; table 1<br>(Family: none) | 1,2,4<br>3 |
| Y | JP 2005-50712 A  (Nichia Chemical Industries,<br>Ltd.),<br>24 February, 2005 (24.02.05),<br>Claim 9<br>& US 2004-229123 A1    & EP 1463132 A2 | 3 |
| Y | JP 2004-342504 A  (Samsung SDI Co., Ltd.),<br>02 December, 2004 (02.12.04),<br>Claim 1<br>(Family: none) | 3 |
| Y | JP 2005-11713 A  (Kureha Chemical Industry<br>Co., Ltd.),<br>13 January, 2005 (13.01.05),<br>Claim 1<br>(Family: none) | 3 |
| A | JP 11-317217 A  (Mitsubishi Chemical Corp.),<br>16 November, 1999 (16.11.99),<br>Full text<br>& US 5916516 A | 1-4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004192896 A

- JP 2005011688 A